# EUROPÄISCHE PATENTSCHRIFT

(11) **EP 0 849 994 B1**
(45) Veröffentlichungstag und Bekanntmachung des Hinweises auf die Patenterteilung: **08.08.2001**
(21) Anmeldenummer: 96931009.3
(22) Anmeldetag: 03.09.1996
(51) Int. Cl.: A01N 43/54

(54) **MITTEL UND VERFAHREN ZUR BEKÄMPFUNG VON SCHADPILZEN**
FUNGICIDAL AGENTS AND METHOD
AGENTS ET PROCEDE PERMETTANT DE LUTTER CONTRE DES CHAMPIGNONS NUISIBLES

(30) Priorität: 05.09.1995 DE 19532752
(43) Veröffentlichungstag der Anmeldung: 01.07.1998
(73) Patentinhaber: BASF AKTIENGESELLSCHAFT, 67056 Ludwigshafen (DE)
(72) Erfinder: EICKEN, Karl, D-67157 Wachenheim (DE); KÖHLE, Harald, D-67273 Bobenheim (DE); RETZLAFF, Günter, D-67354 Römerberg (DE); AMMERMANN, Eberhard, D-64646 Heppenheim (DE); LORENZ, Gisela, D-67434 Hambach (DE); STRATHMANN, Siegfried, D-67117 Limburgerhof (DE)
(74) Vertreter: Kinzebach, Werner, Dr.
(86) Internationale Anmeldenummer: EP9603861
(87) Internationale Veröffentlichungsnummer: WO9708952

(56) Entgegenhaltungen:
- EP-A- 0 326 329

## Beschreibung

Die vorliegende Erfindung betrifft Mittel zur Bekämpfung von Schadpilzen sowie Verfahren zur Bekämpfung von Schadpilzen unter Anwendung derartiger Mittel.

Die EP-A-545 099 beschreibt Anilidverbindungen der Formel 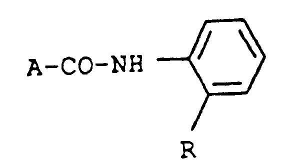 worin A für Phenyl, das in 2-Stellung durch Methyl, Trifluormethyl, Chlor, Brom oder Jod substituiert ist oder für bestimmte aromatische oder nicht-aromatische heterocyclische Reste, die gegebenenfalls durch Methyl, Chlor oder Trifluormethyl substituiert sein können, steht und R für bestimmte aliphatische oder cycloaliphatische Reste, die gegebenenfalls durch Halogen substituiert sein können, oder für Phenyl, das gegebenenfalls durch C₁-C₄-Alkyl, C₁-C₄-Alkoxy, C₁-C₄-Alkylthio oder Halogen substituiert ist, steht. Diese Verbindungen sind zur Bekämpfung von Botrytis brauchbar.

Die EP-A-589 301 beschreibt Anilidverbindungen der gleichen Formel, worin A einen cyclischen Rest der Formeln bedeutet: 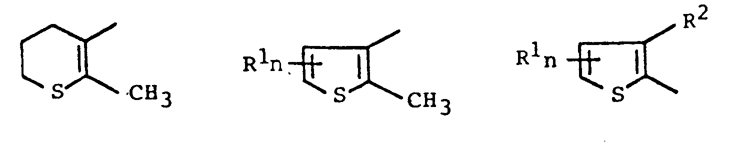 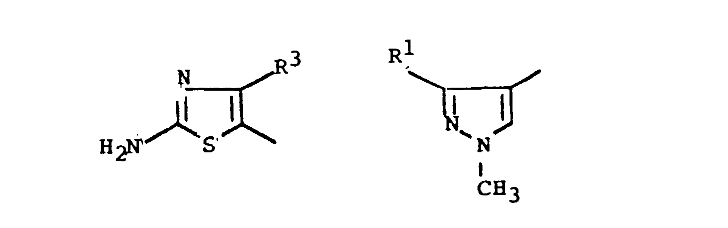 worin R¹ für Wasserstoff oder C₁-C₄-Alkyl steht; R² für Halogen oder C₁-C₄-Alkyl steht; R³ für C₁-C₄-Alkyl oder C₁-C₄-Halogenalkyl steht; n für 1 oder 2 steht; und R im wesentlichen die oben angegebenen Bedeutungen besitzt. Diese Verbindungen sind ebenfalls zur Behandlung von Botrytis brauchbar.

Die WO 93/11117 beschreibt Verbindungen der Formel 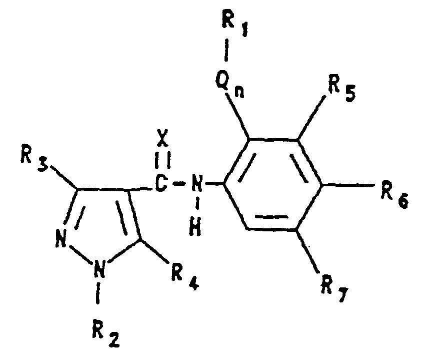 worin
- Q: für C₁-C₃-Alkyl, C₂-C₃-Alkenyl, C₂-C₃-Alkinyl, -(CH₂)ₘCH= oder -(CH₂)ₘ-X-CH₂)m-steht;
- n: für 0 oder 1 steht;
- jedes m: unabhängig voneinander für 0, 1, 2 oder 3 steht;
- jedes x: unabhängig für O oder S steht;
- R¹: für bestimmte alicyclische Reste steht;
- R²: für Wasserstoff, fluoriertes Methyl, Methyl, Ethyl, C₂-C₆-Alkenyl, C₃-C₆-Chloralkyl, Phenyl, Alkylthioalkyl, Alkoxyalkyl, Halogenalkylthioalkyl, Halogenalkoxyalkyl oder Hydroxyalkyl steht;
- R³: für Halogenmethyl, Halogenmethoxy, Methyl, Ethyl, Halogen, Cyano, Methylthio, Nitro, Aminocarbonyl oder Aminocarbonylmethyl steht;
- R⁴: für Wasserstoff, Halogen oder Methyl steht;
- R⁵, R⁶ und R⁷: jeweils unabhängig voneinander ausgewählt sind unter Wasserstoff, Halogen, Cyano, C₁-C₆-Alkyl, C₂-C₆-Alkenyl, C₂-C₆-Alkinyl, C₁-C₄-Alkoxy, C₁-C₄-Alkylthio, C₃-C₄-Cycloalkyl und Halogenmethoxy. Diese Verbindungen sind fungizid wirksam.

Die EP-A-0 326 329 beschreibt substituierte Quinazoline, unter anderem wird auch der Wirkstoff Fenazaquin (4-[2-[4-(t-Butyl)phenyl]ethoxy]quinazolin) genannt.

Diese Verbindungen können in Fungizid-, Mitizid- und Insektizid-Zusammensetzungen zusammen mit einem phytologisch verträglichen Carrier verwendet werden.

Darüber hinaus können diese Zusammensetzungen zur Erweiterung des Wirkspektrums weitere Fungizide, Mitizide oder Insektizide enthalten.

Der vorliegenden Erfindung liegt die Aufgabe zugrunde, eine verbesserte Möglichkeit zur Bekämpfung von Schadpilzen und insbesondere Botrytis zur Verfügung zu stellen.

Überraschenderweise wurde nun gefunden, daß diese Aufgabe mit einem Mittel gelöst wird, welches als Wirkstoffe das als Akarizid bekannte Fenazaquin (The Pesticide Manual, 10. Ausgabe, 1994; CAS Reg. Nr. 120928-09-8) und Amidverbindungen der nachfolgend erläuterten Formel I enthält.

Gegenstand der vorliegenden Erfindung sind daher Mittel zur Bekämpfung von Schadpilzen, die in einem festen oder flüssigen Träger Fenazaquin der Formel: 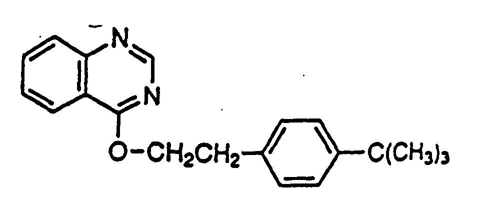 und wenigstens eine Amidverbindung der nachfolgenden Formel I enthalten:

A-CO-NR¹R² (I)

worin
- A: für einen aromatischen oder nicht-aromatischen, 5- oder 6-gliedrigen Heterocyclus, der ausgewählt unter Thiazolyl, Pyrazolyl, Imidazolyl, Oxazolyl, Triazolyl, Thiadiazolyl oder Pyridyl, steht;
wobei der Heterocyclus gegebenenfalls 1, 2 oder 3 Substituenten aufweisen kann, die unabhängig voneinander ausgewählt sind unter Alkyl, Halogen, CHF₂, CF₃, Alkoxy, Halogenalkoxy, Alkylthio, Alkylsulfinyl und Alkylsulfonyl;
- R¹: für ein Wasserstoffatom steht;
- R²: für eine Phenyl- oder Cycloalkylgruppe steht, die gegebenenfalls 1, 2 oder 3 Substituenten aufweist, die ausgewählt sind unter Alkyl, Alkenyl, Alkinyl, Alkoxy, Alkenyloxy, Alkinyloxy, Cycloalkyl, Cycloalkenyl, Cycloalkyloxy, Cycloalkenyloxy, Phenyl und Halogen, wobei die aliphatischen und cycloaliphatischen Reste partiell oder vollständig halogeniert sein können und/oder die cycloaliphatischen Reste durch 1 bis 3 Alkylgruppen substituiert sein können und wobei die Phenylgruppe 1 bis 5 Halogenatome und/oder 1 bis 3 Substituenten aufweisen kann, die unabhängig voneinander ausgewählt sind unter Alkyl, Halogenalkyl, Alkoxy, Halogenalkoxy, Alkylthio und Halogenalkylthio, und wobei die amidische Phenylgruppe mit einem gesättigten, 5-gliedrigen Ring kondensiert sein kann, der gegebenenfalls durch eine oder mehrere Alkylgruppen substituiert ist und/oder ein Heteroatom, ausgewählt unter O und S, aufweisen kann.

Die erfindungsgemäßen Mittel wirken synergistisch und sind daher zur Bekämpfung von Schadpilzen und insbesondere Botrytis besonders geeignet.

Im Rahmen der vorliegenden Erfindung steht Halogen für Fluor, Chlor, Brom und Jod und insbesondere für Fluor, Chlor und Brom.

Der Ausdruck "Alkyl" umfaßt geradkettige und verzweigte Alkylgruppen. Vorzugsweise handelt es sich dabei um geradkettige oder verzweigte C₁-C₁₂-Alkyl- und insbesondere C₁-C₆-Alkylgruppen.

Beispiele für Alkylgruppen sind Alkyl wie insbesondere Methyl, Ethyl, Propyl, 1-Methylethyl, Butyl, 1-Methylpropyl, 2-Methylpropyl 1,1-Dimethylethyl, n-Pentyl, 1-Methylbutyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 1-Methylhexyl, 1-Ethylpentyl, 2-Ethylpentyl, 1-Propylbutyl, Octyl, Decyl, Dodecyl.

Halogenalkyl steht für eine wie oben definierte Alkylgruppe, die mit einem oder mehreren Halogenatomen, insbesondere Fluor und Chlor, teilweise oder vollständig halogeniert ist. Vorzugsweise sind 1 bis 3 Halogenatome vorhanden, wobei die Difluormethan/- oder die Trifluormethylgruppe besonders bevorzugt ist.

Die obigen Ausführungen zur Alkylgruppe und Halogenalkylgruppe gelten in entsprechender Weise für die Alkyl- und Halogenalkylgruppe in Alkoxy, Halogenalkoxy, Alkylthio, Halogenalkylthio, Alkylsulfinyl und Alkylsulfonyl.

Die Alkenylgruppe umfaßt geradkettige und verzweigte Alkenylgruppen. Vorzugsweise handelt es sich dabei um geradkettige oder verzweigte C₃-C₁₂-Alkenylgruppen und insbesondere C₃-C₆-Alkenylgruppen. Beispiele für Alkenylgruppen sind 2-Propenyl, 2-Butenyl, 3-Butenyl, 1-Methyl-2-propenyl, 2-Methyl-2-propenyl, 2-Pentenyl, 3-Pentenyl, 4-Pentenyl, 1-Methyl-2-butenyl, 2-Methyl-2-butenyl, 3-Methyl-2-butenyl, 1-Methyl-3-butenyl, 2-Methyl-3-butenyl, 3-Methyl-3-butenyl, 1,1-Dimethyl-2-propenyl, 1,2-Dimethyl-2-propenyl, 1-Ethyl-2-propenyl, 2-Hexenyl, 3-Hexenyl, 4-Hexenyl, 5-Hexenyl, 1-Methyl-2-pentenyl, 2-Methyl-2-pentenyl, 3-Methyl-2-pentenyl, 4-Methyl-2-pentenyl, 1-Methyl-3-pentenyl, 2-Methyl-3-pentenyl, 3-Methyl-3-pentenyl, 4-Methyl-3-pentenyl, 1-Methyl-4-pentenyl, 2-Methyl-4-pentenyl, 3-Methyl-4-pentenyl, 4-Methyl-4-pentenyl, 1,1-Dimethyl-2-butenyl, 1,1-Dimethyl-3-butenyl, 1,1-Dimethyl-3-butenyl, 1,2-Dimethyl-2-butenyl, 1,2-Dimethyl-3-butenyl, 1,3-Dimethyl-2-butenyl, 1,3-Dimethyl-3-butenyl, 2,2-Dimethyl-3-butenyl, 2,3-Dimethyl-2-butenyl, 2,3-Dimethyl-3-butenyl, 1-Ethyl-2-butenyl, 1-Ethyl-3-butenyl, 2-Ethyl-2-butenyl, 2-Ethyl-3-butenyl, 1,1,2-Trimethyl-2-propenyl, l-Ethyl-1-methyl-2-propenyl und 1-Ethyl-2-methyl-2-propenyl, insbesondere 2-Propenyl, 2-Butenyl, 3-Methyl-2-butenyl und 3-Methyl-2-pentenyl.

Die Alkenylgruppe kann mit einem oder mehreren Halogenatomen, insbesondere Fluor und Chlor, partiell oder vollständig halogeniert sein. Vorzugsweise weist sie 1 bis 3 Halogenatome auf.

Die Alkinylgruppe umfaßt geradkettige und verzweigte Alkinylgruppen. Vorzugsweise handelt es sich dabei um geradkettige und verzweigte C₃-C₁₂-Alkinylgruppen und insbesondere C₃-C₆-Alkinylgruppen. Beispiele für Alkinylgruppen sind 2-Propinyl, 2-Butinyl, 3-Butinyl, 1-Methyl-2-propinyl, 2-Pentinyl, 3-Pentinyl, 4-Pentinyl, 1-Methyl-3-butinyl, 2-Methyl-3-butinyl, 1-Methyl-2-butinyl, 1,1-Dimethyl-2-propinyl, 1-Ethyl-2-propinyl, 2-Hexinyl, 3-Hexinyl, 4-Alkinyl, 5-Hexinyl, 1-Methyl-2-pentinyl, 1-Methyl-3-pentinyl, 1-Methyl-4-pentinyl, 2-Methyl-3-pentinyl, 2-Methyl-4-pentinyl, 3-Methyl-4-pentinyl, 4-Methyl-2-pentinyl, 1,2-Dimethyl-2-butinyl, 1,1-Dimethyl-3-butinyl, 1,2-Dimethyl-3-butinyl, 2,2-Dimethyl-3-butinyl, 1-Ethyl-2-butinyl, 1-Ethyl-3-butinyl, 2-Ethyl-3-butinyl und 1-Ethyl-1-methyl-2-propinyl.

Die obigen Ausführungen zur Alkenylgruppe und deren Halogensubstituenten sowie zur Alkinylgruppe gelten in entsprechender Weise für Alkenyloxy und Alkinyloxy.

Bei der Cycloalkylgruppe handelt es sich vorzugsweise um eine C₃-C₆-Cycloalkylgruppe, wie Cyclopropyl, Cyclobutyl, Cyclopentyl oder Cyclohexyl. Wenn die Cycloalkylgruppe substituiert ist, weist sie vorzugsweise 1 bis 3 C₁-C₄-Alkylreste als Substituenten auf.

Cycloalkenyl steht vorzugsweise für eine C₄-C₆-Cycloalkenylgruppe, wie Cyclobutenyl, Cyclopentenyl oder Cyclohexenyl. Wenn die Cycloalkenylgruppe substituiert ist, weist sie vorzugweise 1 bis 3 C₁-C₄-Alkylreste als Substituenten auf.

Bei einer Cycloalkoxygruppe handelt es sich vorzugsweise um eine C₅-C₆-Cycloalkoxygruppe, wie Cyclopentyloxy oder Cyclohexyloxy. Wenn die Cycloalkoxygruppe substituiert ist, weist sie vorzugsweise 1 bis 3 C₁-C₄-Alkylreste als Substituenten auf.

Bei der Cycloalkenyloxygruppe handelt es sich vorzugsweise um eine C₅-C₆-Cycloalkenyloxygruppe, wie Cyclopentyloxy oder Cyclohexyloxy. Wenn die Cycloalkenyloxygruppe substituiert ist, weist sie vorzugsweise 1 bis 3 C₁-C₄-Alkylreste als Substituenten auf.

Wenn A für einen 5-gliedrigen Heterocyclus steht, handelt es sich insbesondere um einen Thiazolyl-, Pyrazolyl-, Imidazolyl-, Oxazolyl-, Triazolyl- oder Thiadiazolylrest.

Ein Thiazolyl- oder Pyrazolylrest ist bevorzugt.

Wenn A für einen 6-gliedrigen Heterocyclus steht, handelt es sich dabei insbesondere um einen Pyridylrest, insbesondere um einen 3-Pyridylrest,

Die erwähnten heterocyclischen Reste können gegebenenfalls 1, 2 oder 3 der oben genannten Substituenten aufweisen, wobei diese Substituenten vorzugsweise unabhängig voneinander ausgewählt sind unter Alkyl, Halogen, Difluormethyl oder Trifluormethyl.

Besonders bevorzugt steht A für einen Rest der Formeln: 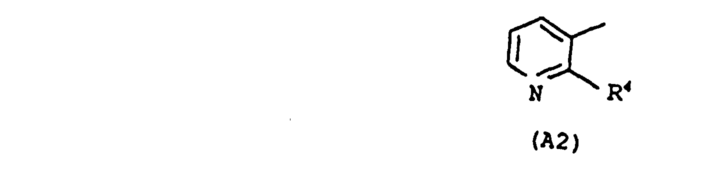 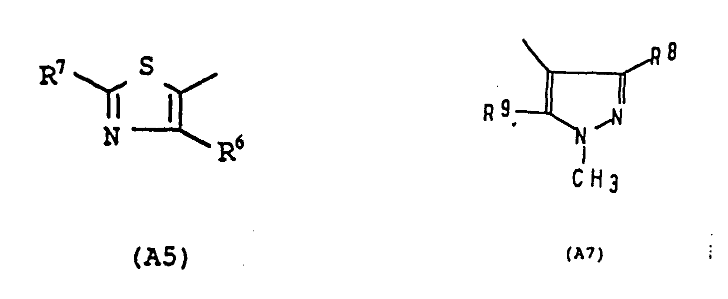 worin R⁴, R⁶, R⁷, R⁸ und R⁹ unabhängig voneinander für Wasserstoff, Alkyl, insbesondere Methyl, Halogen, insbesondere Chlor, CHF₂ oder CF₃ stehen.

Der Rest R¹ in der Formel I steht vorzugsweise für ein Wasserstoffatom.

Der Rest R² in der Formel I steht vorzugsweise für einen Phenylrest. Vorzugsweise weist R² mindestens einen Substituenten auf, der insbesondere bevorzugt in 2-Stellung vorhanden ist. Vorzugsweise ist der Substituent (oder sind die Substituenten) ausgewählt unter Alkyl, Cycloalkyl, Cycloalkenyl, Halogen oder Phenyl.

Die Substituenten des Restes R² können ihrerseits wieder substituiert sein. Die aliphatischen oder cycloaliphatischen Substituenten können dabei partiell oder vollständig halogeniert, insbesondere fluoriert oder chloriert, sein. Vorzugsweise weisen sie 1, 2 oder 3 Fluor- oder Chloratome auf. Wenn der Substituent des Restes R² eine Phenylgruppe ist, so kann diese vorzugsweise mit 1 bis 3 Halogenatomen, insbesondere Chloratomen, und/oder mit einem Rest substituiert sein, der vorzugsweise ausgewählt ist unter Alkyl und Alkoxy. Besonders bevorzugt ist die Phenylgruppe mit einem Halogenatom in p-Position substituiert, d.h. der besonders bevorzugte Substituent des Restes R² ist ein p-halogensubstituierter Phenylrest. Der Rest R² kann auch mit einem gesättigten 5-gliedrigen Ring kondensiert sein, wobei dieser Ring seinerseits 1 bis 3 Alkylsubstituenten aufweisen kann.

R² steht dann beispielsweise für Indanyl, Thiaindanyl und Oxaindanyl. Bevorzugt sind Indanyl und 2-Oxaindanyl, die insbesondere über die 4-Stellung an das Stickstoffatom gebunden sind.

Gemäß einer bevorzugten Ausführungsform enthält das erfindungsgemäße Mittel als Amidverbindung eine Verbindung der Formel I, worin A die folgenden Bedeutungen besitzt:
Pyridyl, Thiazolyl, Pyrazolyl oder Oxazolyl, wobei diese Gruppen 1, 2 oder 3 Substituenten aufweisen können, die unabhängig voneinander ausgewählt sind unter Alkyl, Halogen, Difluormethyl und Trifluormethyl.

Gemäß einer weiteren bevorzugten Ausführungsform steht A für:
Pyridin-3-yl, das gegebenenfalls in 2-Stellung durch Halogen, Methyl, Difluormethyl, Trifluormethyl, Methoxy, Methylthio, Methylsulfinyl oder Methylsulfonyl substituiert ist;
Thiazol-5-yl, das gegebenenfalls in 2- und/oder 4-Stellung durch Methyl, Chlor, Difluormethyl oder Trifluormethyl substituiert ist;
Thiazol-4-yl, das gegebenenfalls in 2- und/oder 5-Stellung durch Methyl, Chlor, Difluormethyl oder Trifluormethyl substituiert ist;
1-Methylpyrazol-4-yl, das gegebenenfalls in 3- und/oder 5-Stellung durch Methyl, Chlor, Difluormethyl oder Trifluormethyl substituiert ist; oder
Oxazol-5-yl, das gegebenenfalls in 2- und/oder 4-Stellung durch Methyl oder Chlor substituiert ist.

Gemäß einer weiteren bevorzugten Ausführungsform enthalten die erfindungsgemäßen Mittel als Amidverbindung eine Verbindung der Formel I, worin R² für eine Phenylgruppe steht, die gegebenenfalls substituiert ist durch 1, 2 oder 3 der oben genannten Substituenten.

Gemäß einer weiteren bevorzugten Ausführungsform enthalten die erfindungsgemäßen Mittel als Amidverbindung eine Verbindung der Formel I, worin R² für eine Phenylgruppe steht, die in 2-Stellung einen der folgenden Substituenten aufweist:
C₃-C₆-Alkyl, C₅-C₆-Cycloalkenyl, C₅-C₆-Cycloalkyloxy, Cycloalkenyloxy, wobei diese Gruppen durch 1, 2 oder 3 C₁-C₄-Alkylgruppen substituiert sein können,
Phenyl, das durch 1 bis 5 Halogenatome und/oder 1 bis 3 Gruppen, die unabhängig voneinander ausgewählt sind unter C₁-C₄-Alkyl, C₁-C₄-Halogenalkyl, C₁-C₄-Alkoxy, C₁-C₄-Halogenalkoxy, C₁-C₄-Alkylthio und C₁-C₄-Halogenalkylthio, substituiert ist,
Indanyl oder Oxaindanyl, das gegebenenfalls durch 1, 2 oder 3 C₁-C₄-Alkylgruppen substituiert ist.

Gemäß einer weiteren bevorzugten Ausführungsform enthalten die erfindungsgemäßen Mittel als Amidverbindung eine Verbindung der Formel Ia, 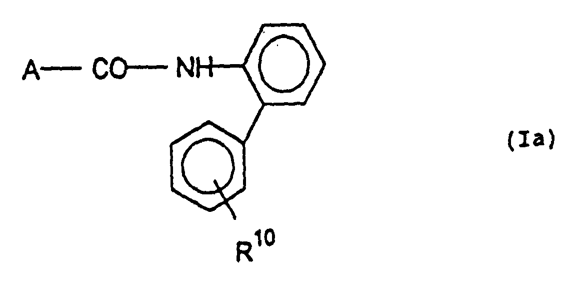 worin
- A: für 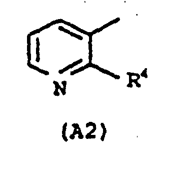 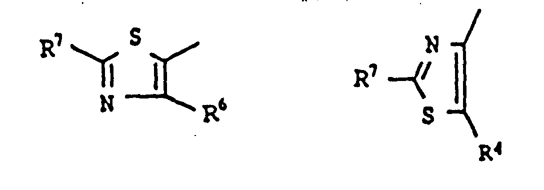 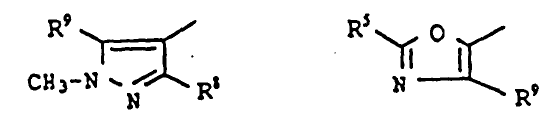 steht;
- R⁴: für Trifluormethyl oder Chlor steht,
- R⁵: für Wasserstoff oder Methyl steht,
- R⁶: für Methyl, Difluormethyl, Trifluormethyl oder Chlor steht,
- R⁷: für Wasserstoff, Methyl oder Chlor steht,
- R⁸: für Methyl, Difluormethyl oder Trifluormethyl steht,
- R⁹: für Wasserstoff, Methyl, Difluormethyl, Trifluormethyl oder Chlor steht,
- R¹⁰: für C₁-C₄-Alkyl, C₁-C₄-Alkoxy, C₁-C₄-Alkylthio oder Halogen steht.

Gemäß einer besonders bevorzugten Ausführungsform enthalten die Mittel als Amidverbindung eine Verbindung der Formel Ib 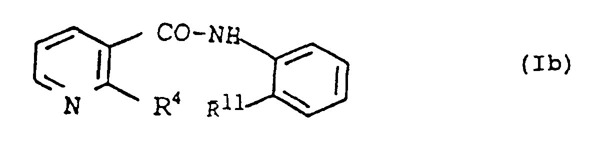 worin
- R⁴: für Halogen steht und
- R¹¹: für Phenyl steht, das durch Halogen substituiert ist.

Brauchbare Amidverbindungen sind in der EP-A-545 099 und 589 301, auf die hiermit in vollem Umfang Bezug genommen wird, genannt.

Die Herstellung der Amidverbindungen der Formel I ist beispielsweise aus der EP-A-545 099 oder 589 301 bekannt oder kann nach analogen Verfahren erfolgen.

Um die synergistische Wirkung zu entfalten, genügt bereits ein geringer Anteil an Amidverbindung der Formel I. Vorzugsweise setzt man Fenazaquin und die Amidverbindung in einem Gewichtsverhältnis ein, das im Bereich von 20:1 bis 1:20, insbesondere 10:1 bis 1:10, liegt.

Gegenstand der Erfindung ist auch ein Verfahren zur Bekämpfung von Schadpilzen, das dadurch gekennzeichnet ist, daß man die Pilze, deren Lebensraum oder die vor Pilzbefall zu schützenden Materialien, Pflanzen, Samen, Böden, Flächen oder Räume mit einem erfindungsgemäßen Mittel behandelt, wobei die Anwendung der Wirkstoffe Fenazaquin und Amidverbindung gleichzeitig, und zwar gemeinsam oder getrennt, oder nacheinander erfolgen kann.

Die erfindungsgemäßen Mittel können beispielsweise in Form von direkt versprühbaren Lösungen, Pulvern Suspensionen, auch hochprozentigen wäßrigen, öligen oder sonstigen Suspensionen oder Dispersionen, Emulsionen, Öldispersionen, Pasten, Stäubemitteln, Streumitteln oder Granulaten durch Versprühen, Vernebeln, Verstäuben, Verstreuen oder Gießen angewendet werden. Die Anwendungsformen richten sich nach den Verwendungszwecken; sie sollten in jedem Fall möglichst die feinste Verteilung der erfindungsgemäßen Wirkstoffe gewährleisten.

Normalerweise werden die Pflanzen mit den Wirkstoffen besprüht oder bestäubt oder die Samen der Pflanzen mit den Wirkstoffen behandelt.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln, wobei im Falle von Wasser als Verdünnungsmittel auch andere organische Lösungsmittel als Hilfslösungsmittel verwendet werden können. Als Hilfsstoffe kommen dafür im wesentlichen in Betracht: Lösungsmittel wie Aromaten (z.B. Xylol), chlorierte Aromaten (z.B. Chlorbenzole), Paraffine (z.B. Erdölfraktionen), Alkohole (z.B. Methanol, Butanol), Ketone (z.B. Cyclohexanon), Amine (z.B. Ethanolamin, Dimethylformamid) und Waser; Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie Ligninsulfitablaugen und Methylcellulose.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole, sowie Fettalkoholglykolether, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isoctyl-, Octyl- oder Nonylphenol, Alkylphenol-, Tributylphenylpolyglykolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglykoletheracetat, Sorbitester, Lignin-Sulfitablaugen oder Methylcellulose in Betracht.

Pulver-, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate können durch Bindung der Wirkstoffe an feste Trägerstoffe hergestellt werden. Feste Trägerstoffe sind Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie Ammoniumsulfat, Ammoniumphosphat, Ammoniumnitrat, Harnstoffe und pflanzliche Produkte, wie Getreidemehl, Baumrinden-, Holz- und Nußschalenmehl, Cellulosepulver oder andere feste Trägerstoffe.

Beispiele für solche Zubereitungen, welche die Wirkstoffe Fenazaquin und Amidverbindung im Gewichtsverhältnis von 8:1 enthalten, sind:
I. eine Lösung aus 90 Gew.-Teilen der Wirkstoffe und 10 Gew.-Teilen N-Methylpyrrolidon, die zur Anwendung in Form kleinster Tropfen geeignet ist;
II. eine Mischung aus 20 Gew.-Teilen der Wirkstoffe, 80 Gew.-Teilen Xylol, 10 Gew.-Teilen des Anlagerungsproduktes von 8 bis 10 Mol Ethylenoxid an 1 Mol Ölsäure-N-monoethanolamid, 5 Gew.-Teilen Calciumsalz der Dodecylbenzolsulfonsäure, 5 Gew.-Teilen des Anlagerungsproduktes von 40 Mol Ethylenoxid an 1 Mol Ricinusöl; durch feines Verteilen der Lösung in Wasser erhält man eine Dispersion;
III. eine wäßrige Dispersion aus 20 Gew.-Teilen der Wirkstoffe, 40 Gew.-Teilen Cyclohexanon, 30 Gew.-Teilen Isobutanol, 20 Gew.-Teilen des Anlagerungsproduktes von 40 Mol Ethylenoxid an 1 Mol Ricinusöl;
IV. eine wäßrige Dispersion aus 20 Gew.-Teilen der Wirkstoffe, 25 Gew.-Teilen Cyclohexanol, 65 Gew.-Teilen einer Mineralölfraktion vom Siedepunkt 210 bis 280°C und 10 Gew.-Teilen des Anlagerungsproduktes von 40 Mol Ethylenoxid an 1 Mol Ricinusöl;
V. eine in einer Hammermühle vermahlene Mischung aus 80 Gew.-Teilen der Wirkstoffe, 3 Gew.-Teilen des Natriumsalzes der Diisobutylnaphthalin-1-sulfonsäure, 10 Gew.-Teilen des Natriumsalzes einer Ligninsulfonsäure aus einer Sulfitablauge und 7 Gew.-Teilen pulverförmigem Kieselsäuregel; durch feines Verteilen der Mischung in Wasser erhält man eine Spritzbrühe;
VI. eine innige Mischung aus 3 Gew.-Teilen der Wirkstoffe und 97 Gew.-Teilen feinteiligem Kaolin; dieses Stäubemittel enthält 3 Gew.-% Wirkstoff;
VII. eine innige Mischung aus 30 Gew.-Teilen der Wirkstoffe, 92 Gew.-Teilen pulverförmigem Kieselsäuregel und 8 Gew.-Teilen Paraffinöl, das auf die Oberfläche dieses Kieselsäuregels gesprüht wurde; diese Aufbereitung gibt dem Wirkstoff eine gute Haftfähigkeit;
VIII. eine stabile wäßrige Dispersion aus 40 Gew.-Teilen der Wirkstoffe, 10 Gew.-Teilen des Natriumsalzes eines Phenolsulfonsäure-Harnstoff-Formaldehyd-Kondensates, 2 Gew.-Teilen Kieselgel und 48 Gew.-Teilen Wasser, die weiter verdünnt werden kann;
IX. eine stabile ölige Dispersion aus 20 Gew.-Teilen der Wirkstoffe, 2 Gew.-Teilen des Calciumsalzes der Dodecylbenzolsulfonsäure, 8 Gew.-Teilen Fettalkohol-polyglykolether, 20 Gew.-Teilen des Natriumsalzes eines Phenolsulfonsäure-Harnstoff-Formaldehydkondensates und 88 Gew.-Teilen eines paraffinischen Mineralöls.

Die erfindungsgemäßen Mittel zeichnen sich durch eine hervorragende Wirksamkeit gegen ein breites Spektrum von pflanzenpathogenen Pilzen, insbesondere gegen Botrytis aus. Sie sind zum Teil systemisch wirksam, (d.h. sie können von der behandelten Pflanze ohne Wirkungsverlust aufgenommen und gegebenenfalls in der Pflanze transportiert werden) und können als Blatt- und Bodenfungizide eingesetzt werden.

Besondere Bedeutung haben sie für die Bekämpfung einer Vielzahl von Pilzen an verschiedenen Kulturpflanzen wie Weizen, Roggen, Gerste, Hafer, Reis, Mais, Gras, Baumwolle, Soja, Kaffee, Zuckerrohr, Wein, Obst- und Zierpflanzen und Gemüsepflanzen wie Gurken, Bohnen und Kürbisgewächsen, sowie an den Samen dieser Pflanzen.

Die Mittel werden angewendet, indem man die Pilze oder die vor Pilzbefall zu schützenden Saatgüter, Pflanzen, Materialien oder den Erdboden mit einer fungizid wirksamen Menge der Wirkstoffe behandelt.

Die Anwendung erfolgt vor oder nach der Infektion der Materialien, Pflanzen oder Samen durch die Pilze.

Speziell eignen sich die Mittel zur Bekämpfung folgender Pflanzenkrankheiten:
Erysiphe graminis (echter Mehltau) in Getreide,
Erysiphe cichoracearum und Sphaerotheca fuliginea an Kürbisgewächsen,
Podosphaera leucotricha an Äpfeln,
Uncinula necator an Reben,
Venturia inaequalis (Schorf) an Äpfeln,
Helminthosporium-Arten an Getreide,
Septoria nodorum an Weizen,
Botrytis cinerea (Grauschimmel) an Erdbeeren, Reben,
Cercospora arachidicola an Erdnüssen,
Pseudocercosporella herpotrichoides an Weizen, Gerste,
Pyricularia oryzae an Reis,
Fusarium- und Verticillium-Arten an verschiedenen Pflanzen,
Alternaria-Arten an Gemüse und Obst,
Monilinia-Arten in Obst,
Sclerotinia-Arten in Raps und Gemüse.

Die Anwendung gegen Botrytis ist bevorzugt.

Die Mittel können auch im Materialschutz (Holzschutz) eingesetzt werden, z.B. gegen Paecilomyces variotii.

Die fungiziden Mittel enthalten im allgemeinen zwischen 0,1 und 95, vorzugsweise zwischen 0,5 und 90 Gew.-% Wirkstoff.

Die Aufwandmengen liegen je nach Art des gewünschten Effektes zwischen 0,02 und 3 kg Wirkstoff pro ha.

Bei der Saatgutbehandlung werden im allgemeinen Wirkstoffmengen von 0,001 bis 50 g, vorzugsweise 0,01 bis 10 g je Kilogramm Saatgut benötigt.

Die erfindungsgemäßen Mittel können in der Anwendungsform als Fungizide auch andere Wirkstoffe enthalten, z.B. Herbizide, Insektizide, Wachstumsregulatoren, Fungizide oder auch Düngemittel.

Beim Vermischen mit Fungiziden erhält man dabei in vielen Fällen eine Vergrößerung des fungiziden Wirkungsspektrums.

Die folgende Liste von Fungiziden, mit denen die erfindungsgemäßen Verbindungen gemeinsam angewendet werden können, soll die Kombinationsmöglichkeiten erläutern, nicht aber einschränken:
Schwefel,
Dithiocarbonate und deren Derivate, wie Ferridimethyldithiocarbamat,
Zinkdimethyldithiocarbamat,
Zinkethylenbisdithiocarbamat,
Manganethylenbisdithiocarbamat,
Mangan-Zink-ethylendiamin-bis-dithiocarbamat,
Tetramethylthiuramdisulfide,
Ammoniak-Komplex von Zink-(N,N-ethylen-bis-dithiocarbamat),
Ammoniak-Komplex von Zink-(N,N'-propylen-bis-dithiocarbamat),
Zink-(N,N'-propylen-bis-dithiocarbamat),
N,N'-Polypropylen-bis(thiocarbamoyl)-disulfid,
Nitroderivate, wie Dinitro-(1-methylheptyl)-phenylcrotonat,
2-sec-Butyl-4,6-dinitrophenyl-3,3-dimethylacrylat,
2-sec-Butyl-4,6-dinitrophenyl-isopropylcarbonat,
5-Nitro-isophthalsäure-di-isopropylester: heterocyclische Substanzen, wie 2-Heptadecyl-2-imidazolin-acetat,
2,4-Dichlor-6-(o-chloranilino)-s-triazin,
O,O-Diethyl-phthalimidophosphonothioat,
5-Amino-1-*β*bis-(dimethylamino)-phosphinyl)O-3-phenyl-1,2,4-triazol,
2,3-Dicyano-1,4-dithioanthrachinon,
2-Thio-1,3-dithioloß4,5-b'chinoxalin,
1-(Butylcarbamoyl)2-benzimidazol)-carbaminsäuremethylester,
2-Methoxycarbonylamino-benzimidazol,
2-(Furyl-(2))-benzimidazol,
2-(Thiazolyl-(4))-benzimidazol,
N-(1,1,2,2-Tetrachlorethylthio)-tetrahydrophthalimid,
N-Trichlormethylthio-tetrahydrophthalimid,
N-Trichlormethylthio-phthalimid,
N-Dichlorfluormethylthio-N',N'-dimethyl-N-phenyl-schwefelsäurediamid,
5-Ethoxy-3-trichlormethyl-1,2,3-thiadiazol,
2-Rhodanmethylthiobenzthiazol,
1,4-Dichlor-2,5-dimethoxybenzol,
4-(2-Chlorphenylhydrazono)-3-methyl-5-isoxazolon,
Pyridin-2-thio-1-oxid,
8-Hydroxychinolin bzw. dessen Kupfersalz,
2,3-Dihydro-5-carboxanilido-6-methyl-1,4-oxathiin,
2,3-Dihydro-5-carboxanilido-6-methyl-1,4-oxathiin-4,4-dioxid,
2-Methyl-5,6-dihydro-4H-pyran-3-carbonsäureanilid,
2-Methyl-furan-3-carbonsäureanilid,
2,5-Dimethyl-furan-3-carbonsäureanilid,
2,4,5-Trimethyl-furan-3-carbonsäureanilid,
2,5-Dimethyl-furan-3-carbonsäurecyclohexylamid,
N-Cyclohexyl-N-methoxy-2,5-dimethyl-furan-3-carbonsäureamid,
2-Methyl-benzoesäureanilid,
2-Jod-benzoesäureanilid,
N-Formyl-N-morpholin-2,2,2-trichlorethylacetat,
Piperazin-1,4-diylbis-(1-(2,2,2-trichlorethyl)-formamid,
1-(3,4-Dichloranilino)-1-formylamino-2,2,2-trichlorethan,
2,6-Dimethyl-N-tridecyl-morpholin bzw. dessen Salze,
2,6-Dimethyl-N-cyclododecyl-morpholin bzw. dessen Salze,
N-[3-(p-tert.-Butylphenyl)-2-methylpropyl]-cis-2,6-dimethylmorpholin,
N-[3-(p-tert.-Butylphenyl)-2-methylpropyl]-piperidin,
1-[2-(2,4-Dichlorphenyl)-4-ethyl-1,3-dioxolan-2-yl-ethyl]-1H,1,2,4-triazol
1-[2-(2,4-Dichlorphenyl)-4-n-propyl)-1,3-dioxolan-2-yl-ethyl]-1H-1,2,4-triazol
N-(n-Propyl)-N-(2,4,6-trichlorphenoxyethyl)-N'-imidazol-yl-harnstoff,
1-(4-Chlorphenoxy)-3,3-dimethyl-1-(1H-1,2,4-triazol-1-yl)-2-butanon,
1-(4-Chlorphenyl)-3,3-dimethyl)-1-(lH-1,2,4-triazol-1-yl)-2-butanol,
α-(2-Chlorphenyl)-a-(4-chlorphenyl)-5-pyrimidinmethanol,
5-Butyl-2-dimethylamino-4-hydroxy-6-methyl-pyrimidin,
Bis-(p-chlorphenyl)-3-pyridinmethanol,
1,2-Bis-(3-ethoxycarbonyl-2-thioureido)-benzol,
1,2-Bis-(3-methoxycarbonyl-2-thioureido)-benzol,
sowie verschiedene Fungizide, wie Dodecylguanidinacetat,
3-[3-(3,5-Dimethyl)-2-oxycyclohexyl)-2-hydroxyethyl)]glutarimid,
Hexachlorbenzol,
DL-Methyl-N-(2,6-dimethylphenyl)-N-furoyl(2)-alaninat,
DL-N-(2,6-Dimethylphenyl)-N-(2'-methoxyacetyl)-alanin-methylester,
N-(2,6-Dimethylphenyl)-N-chloracetyl-D,L-2-aminobutyrolacton,
DL-N-(2,6-Dimethylphenyl)-N-(phenylacetyl)-alaninmethylester,
5-Methyl-5-vinyl-3-(3,5-dichlorphenyl)-2,4-dioxo-1,3-oxazolidin,
3-[3,5-Dichlorphenyl-(5-methyl-5-methoxymethyl]-1,3-oxazolidin-2,4-dion,
3-(3,5-Dichlorphenyl)-1-isopropylcarbamoylhydantoin,
N-(3,5-Dichlorphenyl)-1,2-dimethylcyclopropan-1,2-dicarbonsäureimid,
2-Cyano[N-(ethylaminocarbonyl)-2-methoximino]-acetamid,
1-[2-(2,4-Dichlorphenyl)-pentyl]-1H-1,2,4-triazol,
2,4-Difluor-a-(lH-1,2,4-triazolyl-1-methyl)-benzhydrylalkohol,
N-(3-Chlor-2,6-dinitro-4-trifluormethyl-phenyl)-5-trifluormethyl-3-chlor-2-aminopyridin,
1-((bis-(4-Fluorphenyl)-methylsilyl)-methyl-1H-1,2,4-triazol.

Die synergistische Wirkung der erfindungsgemäßen Mittel wird anhand der folgenden Anwendungsbeispiele erläutert:

### Anwendungsbeispiel 1

### Wirksamkeit gegen Botrytis cinerea

Paprikasämlinge der Sorte "Neusiedler Ideal Elite" wurden, nachdem sich 4 - 5 Blätter gut entwickelt hatten, mit wäßrigen Suspensionen, die 80 % Wirkstoff und 20 % Emulgiermittel in der Trockensubstanz enthielten, tropfnaß gespritzt. Nach dem Antrocknen des Spritzbelages wurden die Pflanzen mit einer Konidienaufschwemmung des Pilzes Botrytis cinerea besprüht und bei 22 - 24°C in eine Kammer mit hoher Luftfeuchtigkeit gestellt. Nach 5 Tagen hatte sich die Krankheit auf den unbehandelten Kontrollpflanzen so stark entwickelt, daß die entstandenen Blattnekrosen den überwiegenden Teil der Blätter bedecken (Befall 83 %). Als Amidverbindungen wurden die Verbindungen I.1 und I.2 der Formeln 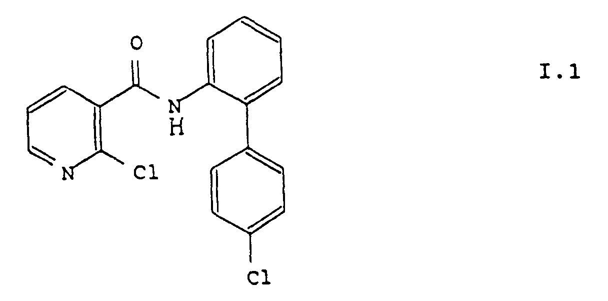 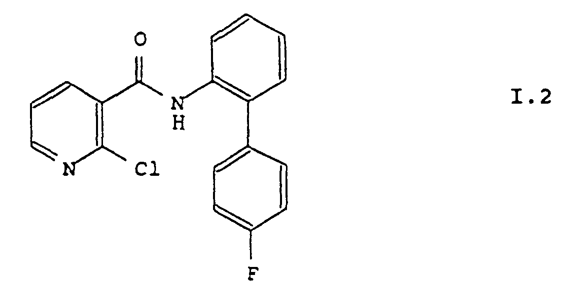 verwendet.

Die visuell ermittelten Werte für den Prozentanteil befallener Blattfläche wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen. Die Ergebnisse sind in der nachfolgenden Tabelle 1 angegeben.

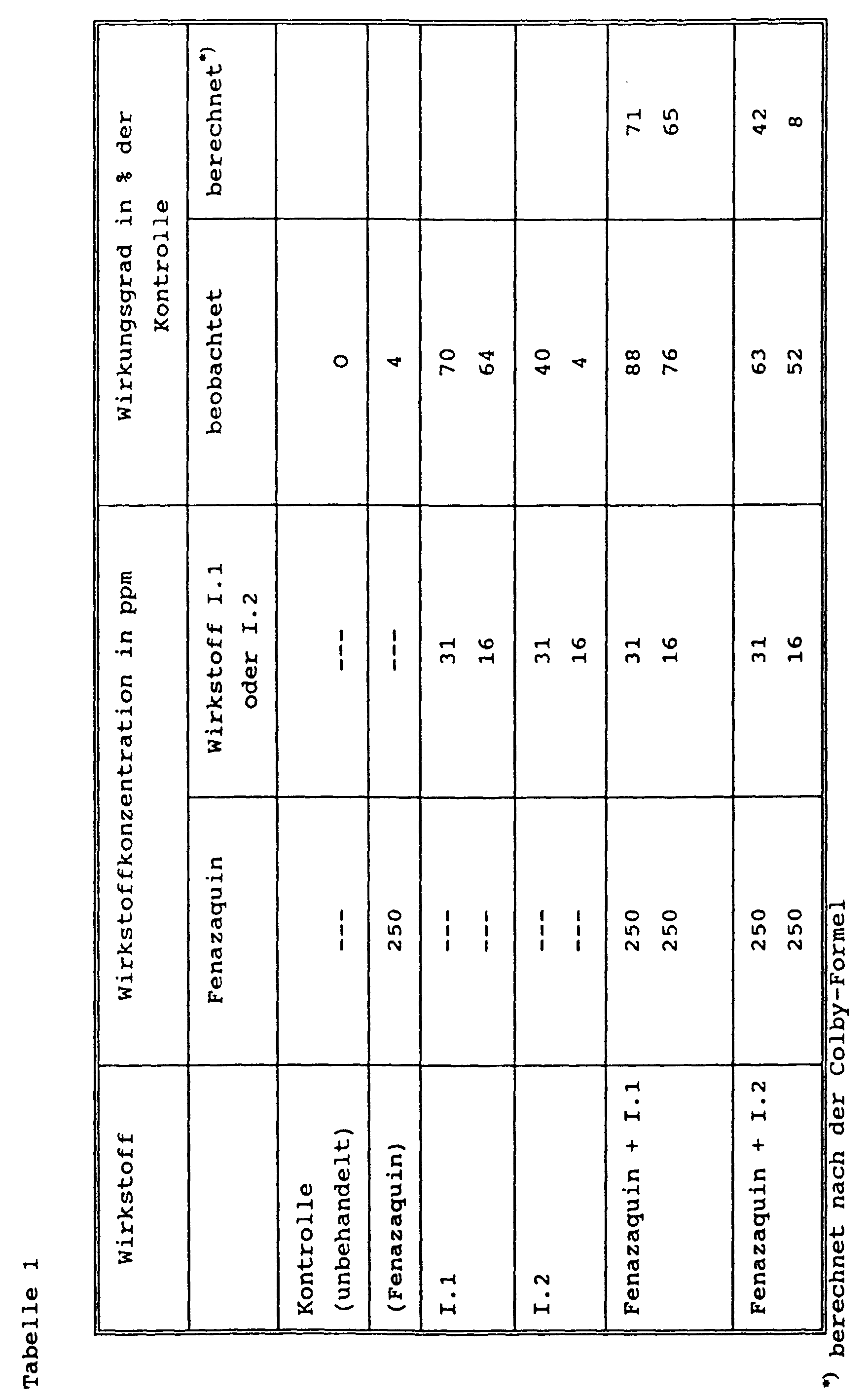

Aus den Ergebnissen des Versuches geht hervor, daß der beobachtete Wirkungsgrad in allen Mischungsverhältnissen höher ist als der nach der Colby-Formel vorausberechnete additive Wirkungsgrad, d.h. es liegt ein synergistischer Effekt vor.

### Anwendungsbeispiel 2

### Wirksamkeit gegen Botrytis cinerea an Paprikaschoten

Scheiben von grünen Paprikaschoten wurden mit wäßriger Wirkstoffaufbereitung, die 80 % Wirkstoff und 20 % Emulgiermittel in der Trockensubstanz enthielt, tropfnaß besprüht. 2 Stunden nach dem Antrocknen des Spritzbelages wurden die Fruchtscheiben mit einer Sporensuspension von Botrytis cinerea, die 1,7 x 10⁶ Sporen pro ml einer 2 %igen Biomalzlösung enthielt, inokuliert. Die inokulierten Fruchtscheiben wurden anschließend in feuchten Kammern bei 18°C 4 Tage inokuliert. Dann erfolgte visuell die Auswertung der Botrytis-Entwicklung auf den befallenen Fruchtscheiben (94 % Befall). Als Amidverbindungen wurden die obigen Verbindungen I.1 und I.2 eingesetzt.

Die visuell ermittelten Werte für den Prozentanteil befallener Blattfläche wurden in Wirkungsgrade als % der unbehandelten Kontrolle umgerechnet. Wirkungsgrad 0 ist gleicher Befall wie in der unbehandelten Kontrolle, Wirkungsgrad 100 ist 0 % Befall. Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen. Die Ergebnisse sind in der nachfolgenden Tabelle 2 angegeben.

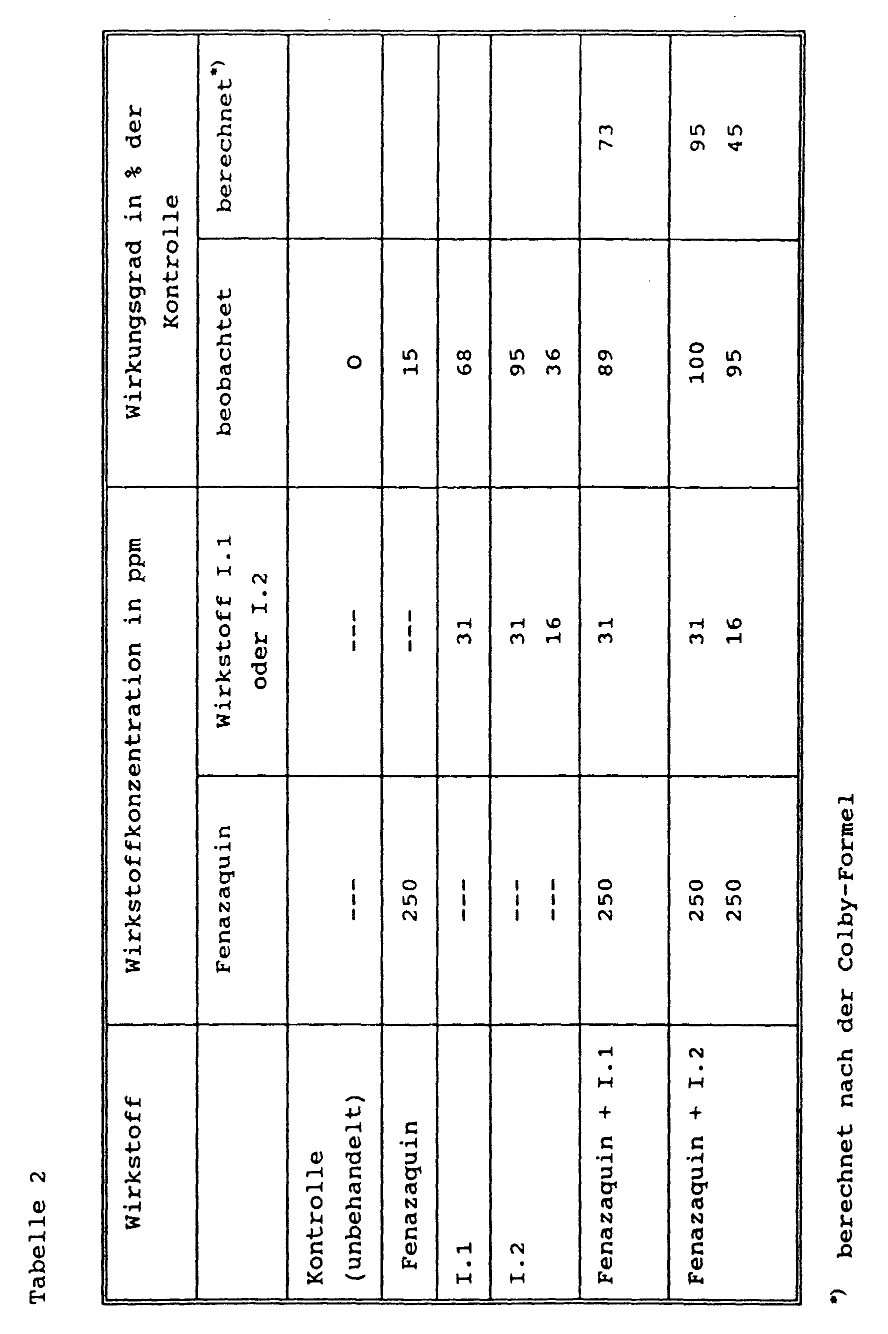

Aus den Ergebnissen des Versuches geht hervor, daß der beobachtete Wirkungsgrad in allen Mischungsverhältnissen höher ist als der nach der Colby-Formel vorausberechnete additive Wirkungsgrad, d.h. es liegt ein synergistischer Effekt vor.

Entsprechende Ergebnisse erhält man, wenn man als Amidverbindung eine der in der folgenden Tabelle 3 genannten Verbindungen der Formel Ia: 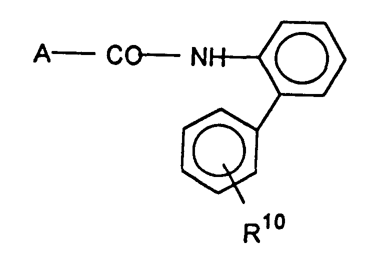 worin A für 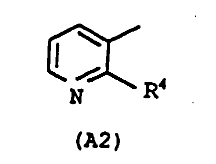 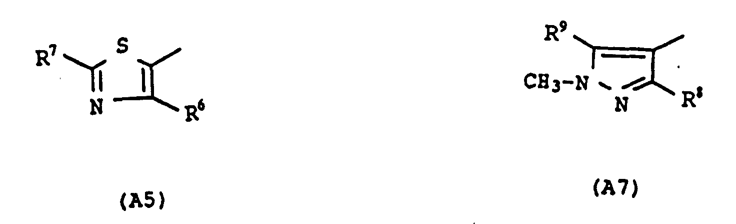 steht,
oder eine andere der in der EP-A-545 099 und 589 301 genannten Einzelverbindungen einsetzt.

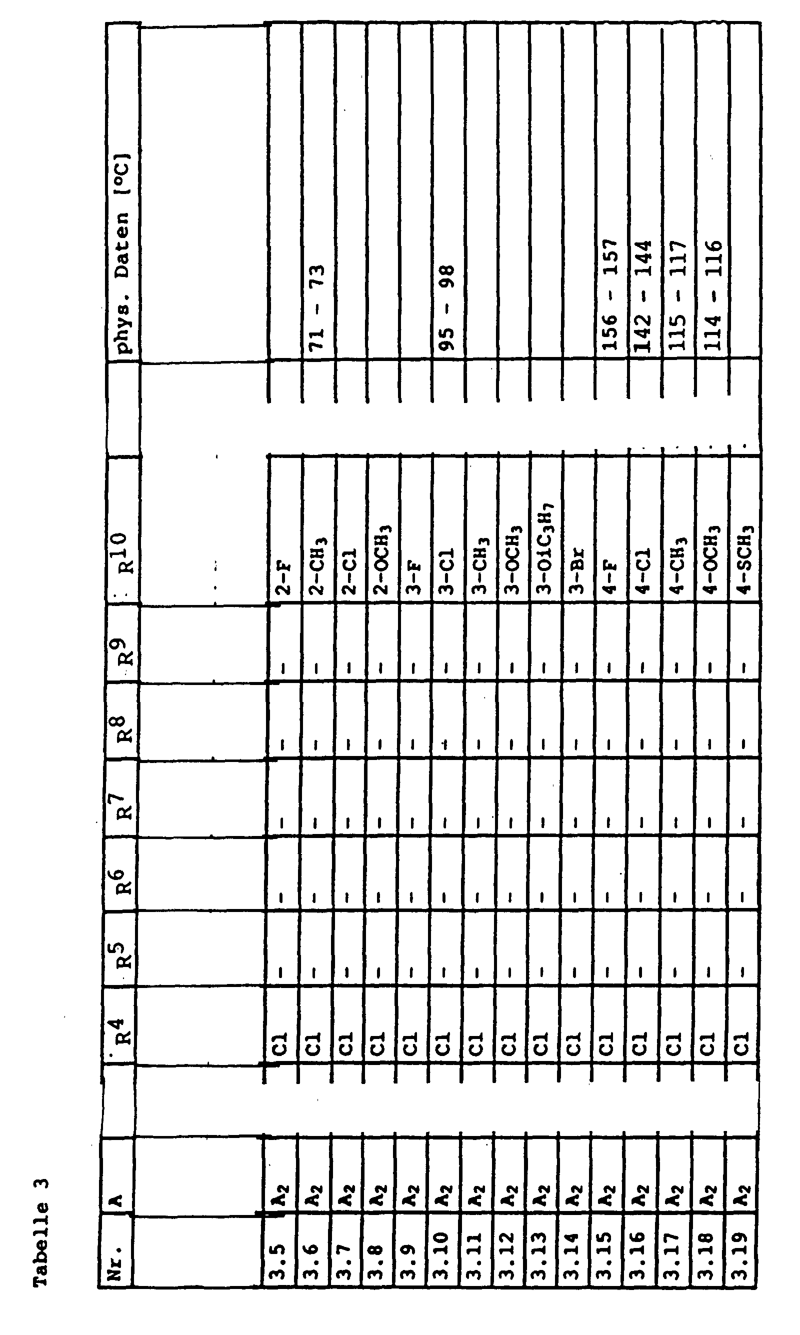

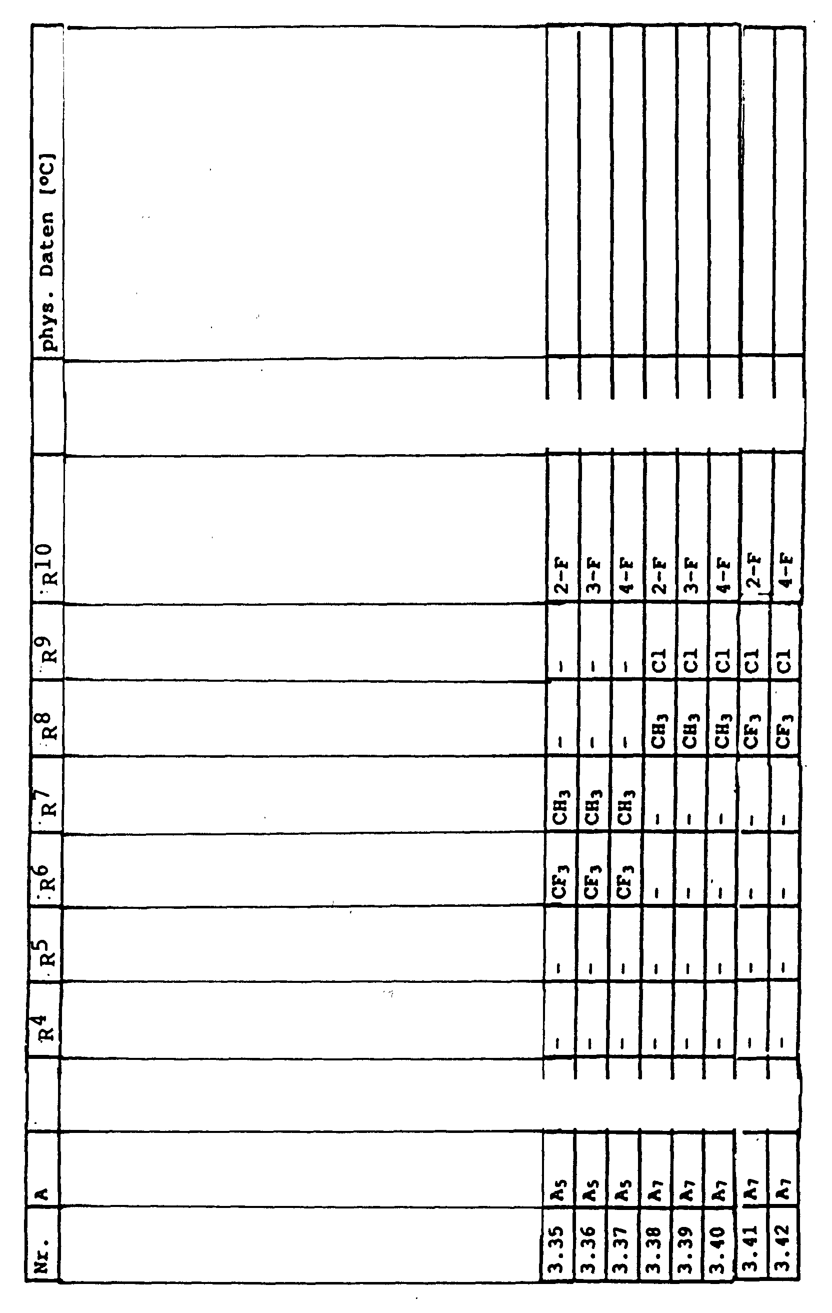

## Patentansprüche

1. Mittel zur Bekämpfung von Schadpilzen, das in einem festen oder flüssigen Träger Fenazaquin der Formel: 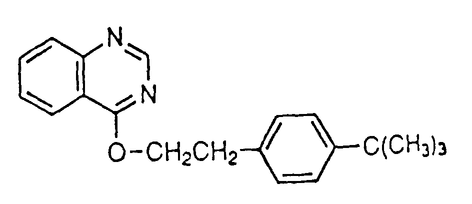 und wenigstens eine Amidverbindung der nachfolgenden Formel enthält:
A-CO-NR¹R²
worin
A für einen aromatischen oder nicht-aromatischen, 5- oder 6-gliedrigen Heterocyclus, der ausgewählt unter Thiazolyl, Pyrazol, Imidazolyl, Oxazolyl, Triazol, Thiadiazolyl oder Pyridyl ausgewählt sind unter O, N und S, steht; wobei der Heterocyclus gegebenenfalls 1, 2 oder 3 Substituenten aufweisen kann, die unabhängig voneinander ausgewählt sind unter Alkyl, Halogen CHF₂, CF₃, Alkoxy, Halogenalkoxy, Alkylthio, Alkylsulfinyl und Alkylsulfonyl;
R¹ für ein Wasserstoffatom steht;
R² für eine Phenyl- oder Cycloalkylgruppe steht, die gegebenenfalls 1, 2 oder 3 Substituenten aufweist, die unabhängig voneinander ausgewählt sind unter Alkyl, Alkenyl, Alkinyl, Alkoxy, Alkenyloxy, Alkinyloxy, Cycloalkyl, Cycloalkenyl, Cycloalkyloxy, Cycloalkenyloxy, Phenyl und Halogen, wobei die aliphatischen und cycloaliphatischen Reste partiell oder vollständig halogeniert sein können und/oder die cycloaliphatischen Reste durch 1 bis 3 Alkylgruppen substituiert sein können und wobei die Phenylgruppe 1 bis 5 Halogenatome und/oder 1 bis 3 Substituenten aufweisen kann, die unabhängig voneinander ausgewählt sind unter Alkyl, Halogenalkyl, Alkoxy, Halogenalkoxy, Alkylthio und Halogenalkylthio, und wobei die amidische Phenylgruppe gegebenenfalls mit einem'gesättigten 5-gliedrigen Ring kondensiert ist, der gegebenenfalls durch eine oder mehrere Alkylgruppen substituiert ist und/oder ein Heteroatom, ausgewählt unter O und S, aufweisen kann.

2. Mittel nach Anspruch 1, wobei in der Formel I der Rest A für eine der folgenden Gruppen steht:
Pyridyl, Thiazolyl, Pyrazolyl oder Oxazolyl, wobei diese Gruppen 1, 2 oder 3 Substituenten aufweisen können, die unabhängig voneinander ausgewählt sind unter Alkyl, Halogen, Difluormethyl und Trifluormethyl.

3. Mittel nach Anspruch 1, wobei in der Formel I der Rest A für eine der folgenden Gruppen steht:
Pyridin-3-yl, das gegebenenfalls in 2-Stellung durch Halogen, Methyl, Difluormethyl, Trifluormethyl, Methoxy, Methylthio, Methylsulfinyl oder Methylsulfonyl substituiert ist;
Thiazol-5-yl, das gegebenenfalls in 2- und/oder 4-Stellung durch Methyl, Chlor, Difluormethyl oder Trifluormethyl substituiert ist;
Thiazol-4-yl, das gegebenenfalls in 2- und/oder 5-Stellung durch Methyl, Chlor, Difluormethyl oder Trifluormethyl substituiert ist;
1-Methylpyrazol-4-yl, das gegebenenfalls in 3- und/oder 5-Stellung durch Methyl, Chlor, Difluormethyl oder Trifluormethyl substituiert ist; oder
Oxazol-5-yl, das gegebenenfalls in 2- und/oder 4-Stellung durch Methyl oder Chlor substituiert ist.

4. Mittel nach einem der vorhergehenden Ansprüche, das eine Verbindung der Formel I enthält, worin R² für eine Phenylgruppe steht, die gegebenenfalls substituiert ist durch 1, 2 oder 3 der in Anspruch 1 genannten Substituenten.

5. Mittel nach Anspruch 4, wobei R² für eine Phenylgruppe steht, die in 2-Stellung einen der folgenden Substituenten aufweist:
C₃-C₆-Alkyl, C₅-C₆-Cycloalkenyl, C₅-C₆-Cycloalkyloxy, Cycloalkenyloxy, wobei diese Gruppen durch 1, 2 oder 3 C₁-C₄-Alkylgruppen substituiert sein können,
Phenyl, das durch 1 bis 5 Halogenatome und/oder 1 bis 3 Gruppen, die unabhängig voneinander ausgewählt sind unter C₁-C₄-Alkyl, C₁-C₄-Halogenalkyl, C₁-C₄-Alkoxy, C₁-C₄-Halogenalkoxy, C₁-C₄-Alkylthio und C₁-C₄-Halogenalkylthio, substituiert ist,
oder wobei R² für Indanyl oder Oxaindanyl steht, das gegebenenfalls durch 1, 2 oder 3 C₁-C₄-Alkylgruppen substituiert ist.

6. Mittel nach einem der Ansprüche 1 bis 5, das eine Amidverbindung der nachfolgenden Formel Ia enthält: 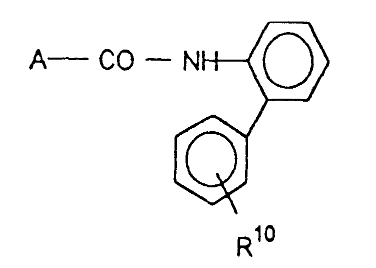 worin
A für 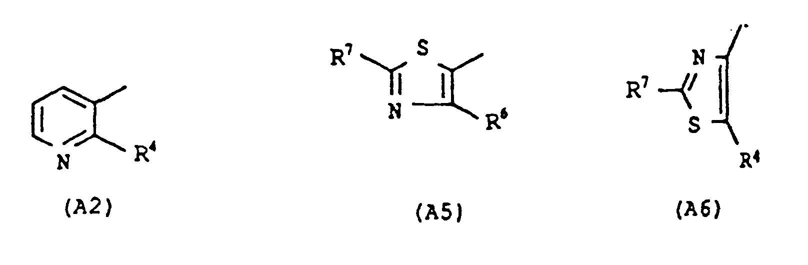 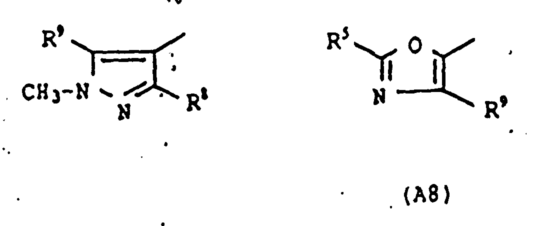 steht;
R⁴ für Trifluormethyl oder Chlor steht,
R⁵ für Wasserstoff oder Methyl steht,
R⁶ für Methyl, Difluormethyl, Trifluormethyl oder Chlor steht,
R⁷ für Wasserstoff, Methyl oder Chlor steht,
R⁸ für Methyl, Difluormethyl oder Trifluormethyl steht,
R⁹ für Wasserstoff, Methyl, Difluormethyl, Trifluormethyl oder Chlor steht,
R¹⁰ für C₁-C₄-Alkyl, C₁-C₄-Alkoxy, C₁-C₄-Alkylthio oder Halogen steht.

7. Mittel nach einem der Ansprüche 1 bis 5, das als Amidverbindung eine Verbindung der nachfolgenden Formel Ib enthält: 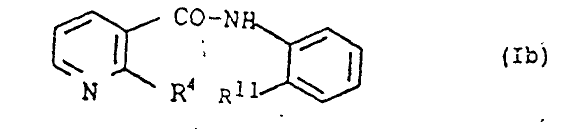 worin
R⁴ für Haloqen steht und
R¹¹ für Phenyl steht, das durch Halogen substituiert ist.

8. Mittel nach Anspruch 1, das als Amidverbindung eine Verbindung der nachfolgenden Formeln enthält:

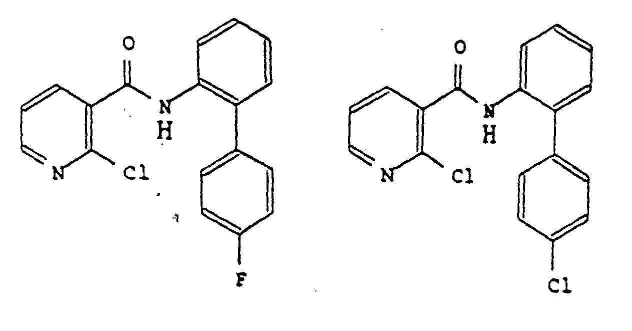

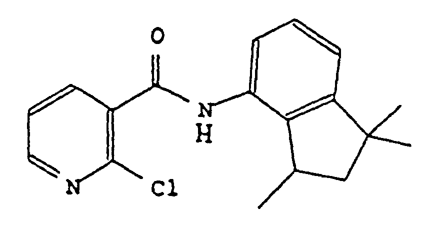

9. Mittel nach einem der vorhergehenden Ansprüche, das in zwei Teilen konditioniert ist, wobei der eine Teil Fenazaquin in einem festen oder flüssigen Träger enthält und der andere Teil die Amidverbindung in einem festen oder flüssigen Träger enthält.

10. Verfahren zur Bekämpfung von Schadpilzen, dadurch gekennzeichnet, daß man die Pilze, deren Lebensraum oder die vor Pilzbefall zu schützenden Materialien, Pflanzen, Samen, Böden, Flächen oder Räume mit einem Mittel gemäß einem der Ansprüche 1 bis 9 behandelt, wobei die Anwendung der Wirkstoffe Fenazaquin und Amidverbindung gleichzeitig, und zwar gemeinsam oder getrennt, oder nacheinander erfolgen kann.

## Claims

1. A composition for controlling harmful fungi, which comprises, in a solid or liquid carrier, fenazaquin, of the formula: 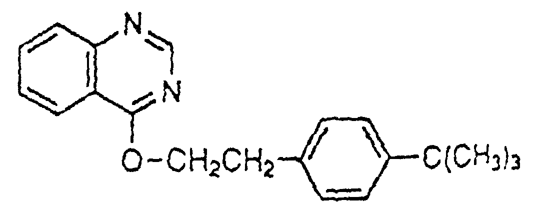 and at least one amide compound of the formula below:
A-CO-NR¹R²
where
A is an aromatic or non-aromatic, 5- or 6-membered heterocycle which is selected from amongst thiazolyl, pyrazole, imidazolyl, oxazolyl, triazole, thiadiazolyl or pyridyl selected from amongst O, N and S;
it being possible for the heterocycle to be unsubstituted or to have 1, 2 or 3 substituents which, independently of one another, are selected from amongst alkyl, halogen, CHF₂, CF₃, alkoxy, haloalkoxy, alkylthio, alkylsulfinyl and alkylsulfonyl;
R¹ is a hydrogen atom;
R² is a phenyl or cycloalkyl group which is unsubstituted or has 1, 2 or 3 substituents which, independently of one another, are selected from amongst alkyl, alkenyl, alkynyl, alkoxy, alkynyloxy, cycloalkyl, cycloalkenyl, cycloalkyloxy, cycloalkenyloxy, phenyl and halogen, it being possible for the aliphatic and cycloaliphatic radicals to be partially or fully halogenated and/or for the cycloaliphatic radicals to be substituted by 1 to 3 alkyl groups, and it being possible for the phenyl group to have 1 to 5 halogen atoms and/or 1 to 3 substituents which, independently of one another, are selected from amongst alkyl, haloalkyl, alkoxy, haloalkoxy, alkylthio and haloalkylthio, and it being possible for the amidic phenyl group to be fused to a saturated 5-membered ring which is unsubstituted or substituted by one or more alkyl groups and/or can have a hetero atom selected from amongst O and S.

2. A composition as claimed in claim 1, where, in formula I, the radical A is one of the following groups:
pyridyl, thiazolyl, pyrazolyl or oxazolyl, it being possible for these groups to have 1, 2 or 3 substituents which, independently of one another, are selected from amongst alkyl, halogen, difluoromethyl and trifluoromethyl.

3. A composition as claimed in claim 1, where, in formula I, the radical A is one of the following groups:
pyridin-3-yl which is unsubstituted or substituted in the 2-position by halogen, methyl, difluoromethyl, trifluoromethyl, methoxy, methylthio, methylsulfinyl or methylsulfonyl;
thiazol-5-yl which is unsubstituted or substituted in the 2- and/or 4-position by methyl, chlorine, difluoromethyl or trifluoromethyl;
thiazol-4-yl which is unsubstituted or substituted in the 2- and/or 5-position by methyl, chlorine, difluoromethyl or trifluoromethyl;
1-methylpyrazol-4-yl which is unsubstituted or substituted in the 3- and/or 5-position by methyl, chlorine, difluoromethyl or trifluoromethyl; or
oxazol-5-yl which is unsubstituted or substituted in the 2- and/or 4-position by methyl or chlorine.

4. A composition as claimed in any of the preceding claims which comprises a compound of the formula I where R² is a phenyl group which is unsubstituted or substituted by 1, 2 or 3 of the substituents mentioned in claim 1.

5. A composition as claimed in claim 4, where R² is a phenyl group which has one of the following substituents in the 2-position:
C₃-C₆-alkyl, C₅-C₆-cycloalkenyl, C₅-C₆-cycloalkyloxy, cycloalkenyloxy, it being possible for these groups to be substituted by 1, 2 or 3 C₁-C₄-alkyl groups,
phenyl which is substituted by 1 to 5 halogen atoms and/or 1 to 3 groups which are selected, independently of one another, from amongst C₁-C₄-alkyl, C₁-C₄-haloalkyl, C₁-C₄-alkoxy, C₁-C₄-haloalkoxy, C₁-C₄-alkylthio and C₁-C₄-haloalkylthio,
or where R² is indanyl or oxaindanyl, which is unsubstituted or substituted by 1, 2 or 3 C₁-C₄-alkyl groups.

6. A composition as claimed in any of claims 1 to 5, which comprises an amide compound of the formula Ia below: 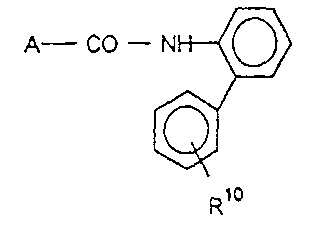 where
A is 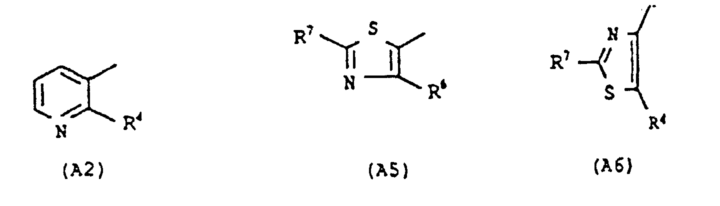 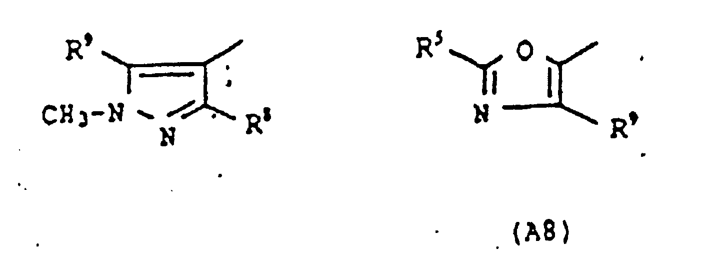
R⁴ is trifluoromethyl or chlorine,
R⁵ is hydrogen or methyl,
R⁶ is methyl, difluoromethyl, trifluoromethyl or chlorine,
R⁷ is hydrogen, methyl or chlorine,
R⁸ is methyl, difluoromethyl or trifluoromethyl,
R⁹ is hydrogen, methyl, difluoromethyl, trifluoromethyl or chlorine,
R¹⁰ is C₁-C₄-alkyl, C₁-C₄-alkoxy, C₁-C₄-alkylthio or halogen.

7. A composition as claimed in any of claims 1 to 5, which comprises, as the amide compound, a compound of the formula Ib below: 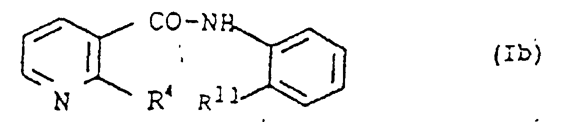 where
R⁴ is halogen and
R¹¹ is phenyl which is substituted by halogen.

8. A composition as claimed in claim 1 which comprises, as the amide compound, a compound of one of the

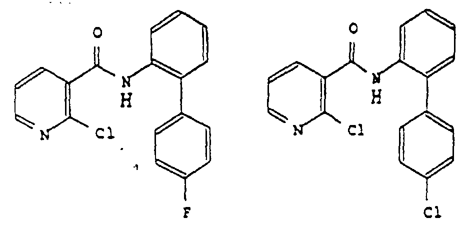

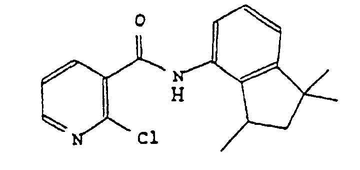

9. A composition as claimed in any of the preceding claims, which is formulated in two parts, one part comprising fenazaquin in a solid or liquid carrier and the other part comprising the amide compound in a solid or liquid carrier.

10. A method of controlling harmful fungi, which comprises treating the fungi, their environment, or the materials, plants, seeds, soils, areas or spaces to be protected against fungal infection, with a composition as claimed in any of claims 1 to 9, it being possible to apply the active ingredients fenazaquin and amide compound simultaneously, ie. concomitantly or separately, or in succession.

## Revendications

1. Agent pour lutter contre des champignons nuisibles, qui contient dans un support solide ou liquide de la fénazaquine de formule: 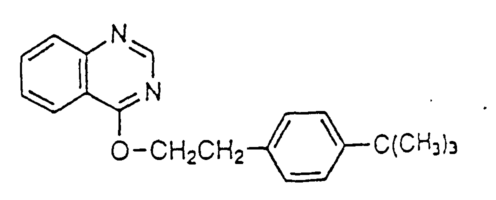 et au moins un composé d'amide ayant la formule suivante:
A-CO-NR¹R²
où
A représente un hétérocycle à 5 ou 6 chaînons, aromatique ou non-aromatique, qui est choisi parmi le thiazolyle, pyrazole, imidazolyle, oxazolyle, triazole, thiadiazolyle ou pyridyle; tandis que l'hétérocycle peut éventuellement présenter 1, 2 ou 3 substituants, qui sont choisis indépendamment l'un de l'autre parmi les groupes alkyle, halogéno, CHF₂, CF₃, alcoxy, halogénoalcoxy, alkylthio, alkyl-sulfinyle et alkylsulfonyle;
R¹ désigne un atome d'hydrogène;
R² représente un groupe phényle ou cycloalkyle, qui présente éventuellement 1, 2 ou 3 substituants, qui sont choisis indépendamment l'un de l'autre parmi les groupes alkyle alcényle, alcynyle, alcoxy, alcényloxy, alcynyloxy, cycloalkyle, cycloalcényle, cycloalkyloxy, cycloalcényloxy, phényle et halogéno, tandis que les restes aliphatiques et cycloaliphatiques peuvent être partiellement ou totalement halogénés et/ou les restes cycloaliphatiques peuvent être substitués par 1 à 3 groupes alkyle, et tandis que le groupe phényle peut présenter 1 à 5 atomes d'halogène et/ou 1 à 3 substituants, qui sont choisis indépendamment l'un de l'autre parmi les groupes alkyle, halogénoalkyle, alcoxy, halogénoalcoxy, alkylthio et halogénoalkylthio, et tandis que le groupe phényle amidique est éventuellement condensé avec un cycle saturé à 5 chaînons, qui peut être éventuellement substitué par un ou plusieurs groupes alkyle et/ou peut présenter un hétéroatome, choisi parmi O et S.

2. Agent selon la revendication 1, dans lequel dans la formule I le reste A représente l'un des groupes suivants:
pyridyle, thiazolyle, pyrazolyle ou oxazolyle, tandis que ces groupes peuvent présenter 1, 2 ou 3 substituants, qui sont choisis indépendamment l'un de l'autre parmi les groupes alkyle, halogéno, difluorométhyle et trifluorométhyle.

3. Agent selon la revendication 1, dans lequel dans la formule I le reste A représente l'un des groupes suivants:
pyridine-3-yle, qui est éventuellement substitué en position 2 par un groupe halogéno, méthyle, difluorométhyle, trifluorométhyle, méthoxy, méthylthio, méthylsulfinyle ou méthylsulfonyle;
thiazole-5-yle, qui est éventuellement substitué en position 2 et/ou 4 par un groupe méthyle, chloro, difluorométhyle ou trifluorométhyle;
thiazole-4-yle, qui est éventuellement substitué en position 2 et/ou 5 par un groupe méthyle, chloro, difluorométhyle ou trifluorométhyle;
1-méthylpyrazole-4-yle, qui est éventuellement substitué en position 3 et/ou 5 par un groupe méthyle, chloro, difluorométhyle ou trifluorométhyle; ou
oxazole-5-yle, qui est éventuellement substitué en position 2 et/ou 4 par un groupe méthyle ou chloro.

4. Agent selon l'une des revendications précédentes, qui contient un composé de formule I, dans laquelle R² représente un groupe phényle, qui est éventuellement substitué par 1, 2 ou 3 des substituants indiqués dans la revendication 1.

5. Agent selon la revendication 4, tandis que R² représente un groupe phényle, qui présente en position 2 l'un des substituants suivants:
alkyle en C₃-C₆, cycloalcényle en C₅-C₆, cycloalkyloxy en C₅-C₆, cycloalcényloxy, tandis que ces groupes peuvent être substitués par 1, 2 ou 3 groupes alkyle en C₁-C₄,
phényle, qui est substitué par 1 à 5 atomes d'halogène et/ou 1 à 3 groupes, qui sont choisis indépendamment l'un de l'autre parmi les groupes alkyle en C₁-C₄, halogénoalkyle en C₁-C₄, alcoxy en C₁-C₄, halogénoalcoxy en C₁-C₄, alkylthio en C₁-C₄ et halogénoalkylthio en C₁-C₄,
ou tandis de R² représente un groupe indanyle ou oxaindanyle, qui est éventuellement substitué par 1, 2 ou 3 groupes alkyle en C₁-C₄.

6. Agent selon l'une des revendications 1 à 5, qui contient un composé d'amide ayant la formule suivante Ia: 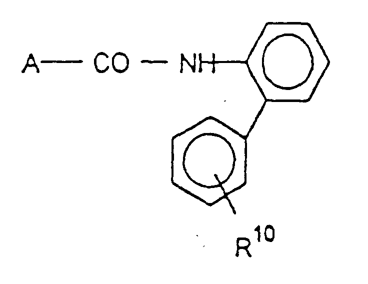 où
A désigne 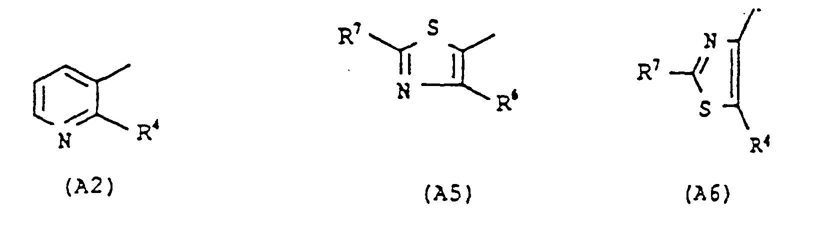 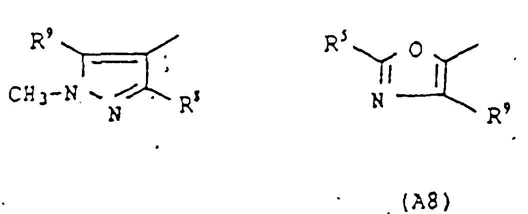
R⁴ représente un groupe trifluorométhyle ou chloro,
R⁵ représente l'hydrogène ou un groupe méthyle,
R⁶ représente un groupe méthyle, difluorométhyle, trifluorométhyle ou chloro,
R⁷ représente l'hydrogène ou un groupe méthyle ou chloro,
R⁸ représente un groupe méthyle, difluorométhyle ou trifluorométhyle,
R⁹ représente l'hydrogène ou un groupe méthyle, difluorométhyle, trifluorométhyle ou chloro,
R¹⁰ représente un groupe alkyle en C₁-C₄, alcoxy en C₁-C₄, alkylthio en C₁-C₄ ou halogéno.

7. Agent selon l'une des revendications 1 à 5, qui contient comme composé d'amide un composé ayant la formule suivant Ib: 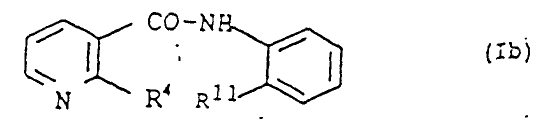 où
R⁴ désigne un halogéno et
R¹¹ désigne un groupe phényle, qui est substitué par un halogène.

8. Agent selon la revendication 1, qui contient comme composé d'amide un composé ayant les formules suivantes:

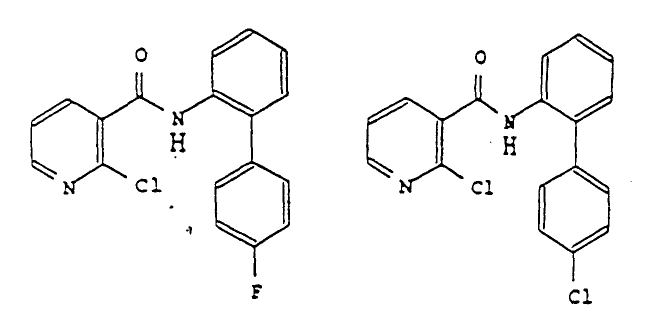

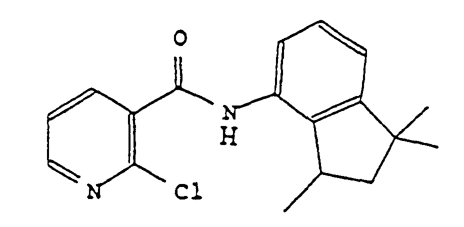

9. Agent selon l'une des revendications précédentes, qui est conditionné en deux parties, la première partie contenant de la fénazaquine dans un support solide ou liquide et l'autre partie contenant le composé d'amide dans un support solide ou liquide.

10. Procédé pour lutter contre les champignons nuisibles, caractérisé par le fait qu'on traite les champignons, leur biotope ou les matières, plantes, semences, sols, surfaces ou espaces à protéger contre le développement de champignons avec un agent selon l'une des revendications 1 à 9, tandis que l'application des substances actives fénazaquine et composé d'amide peut s'effectuer simultanément, et dans ce cas conjointement ou séparément, ou successivement.
